**Europäisches Patentamt**

**European Patent Office**

**Office européen des brevets**

(19)

(11) Veröffentlichungsnummer: **0 027 293**

**A1**

(12) ## EUROPÄISCHE PATENTANMELDUNG

(21) Anmeldenummer: **80200953.0**

(22) Anmeldetag: **10.10.80**

(51) Int. Cl.³: **B 62 D 1/04**

(30) Priorität: **16.10.79 DE 2941760**

(43) Veröffentlichungstag der Anmeldung:
**22.04.81 Patentblatt 81/16**

(84) Benannte Vertragsstaaten:
**DE FR GB IT SE**

(71) Anmelder: **KARL SCHMIDT GmbH**
**Christian-Schmidt-Strasse 8/12**
**D-7107 Neckarsulm(DE)**

(72) Erfinder: **Grothe, Klaus, Ing. grad.**
**Karlstrasse 13**
**D-8750 Aschaffenburg(DE)**

(74) Vertreter: **Fischer, Ernst, Dr.**
**Reuterweg 14**
**D-6000 Frankfurt am Main 1(DE)**

(54) **Lenkrad.**

(57) Ein Lenkrad, bestehend aus einer gegossenen Nabe (2), wenigstens einer darin eingegossenen Speiche (3) und einem Lenkradkranz (1), ist mit einer Kunststoffummantelung (6) versehen.

Damit das Lenkrad als Schreibunterlage benutzbar ist, ist die in der senkrechten Mittelebene verlaufende Speiche (3) verbreitert ausgebildet und die die Speiche (3) umgebende Kunststoffummantelung (6) zum Fahrer hin mit einem ganz oder teilweise umlaufenden, mit einer schmalen Innenlippe (9) ausgestatteten hochgezogenen Rand (8) versehen, wobei unter der Innenlippe (9) eine aus einem harten Werkstoff bestehende Platte (10) festgeklemmt ist.

Fig. 1

EP 0 027 293 A1

**0027293**

KARL SCHMIDT GMBH
Christian-Schmidt-Straße 8/12
7107 Neckarsulm

12.10.1979
-DRQ/GKP-

Prov. Nr. 8440 KSL

## Lenkrad
-------

Die Erfindung betrifft ein Lenkrad, bestehend aus einer gegossenen Nabe, wenigstens einer darin eingegossenen, in der senkrechten Mittelebene angeordneten Speiche und einem damit verbundenen Kranz, die insgesamt mit einem elastisch oder plastisch verformbaren Kunststoff ummantelt sind.

Ein solches Lenkrad weist bestimmte Verformungseigenschaften auf, um bei einem Aufprall oder Zusammenstoß des Fahrzeugs die durch den Fahrer darauf ausgeübten Kräfte aufnehmen zu können. Darüber hinaus gewährt ein derart gestaltetes Lenkrad Blickfreiheit für die in Blickrichtung des Fahrers angeordneten Anzeigeinstrumente.

Es wurde nun gefunden, daß das eingangs beschriebene Lenkrad weiter verbessert werden kann, wenn erfindungsgemäß die in der senkrechten Mittelebene verlaufende Speiche stark verbreitert ausgebildet ist und die die Speiche umgebende Kunststoffummantelung zum Fahrer hin mit einem ganz oder teilweise umlaufenden, mit einer schmalen Innenlippe ausgestatteten hochgezogenen Rand versehen ist, wobei unter der Innenlippe eine aus einem harten Werkstoff bestehende, vorzugsweise als Schreibunterlage dienende Platte eingeklemmt ist.

- 2 -

Am nabenseitigen Rand kann die Lippe in Längsrichtung der Speiche vergleichsweise breit ausgebildet sein, um beispielsweise Zettel darunter festklemmen zu können.

Die Speiche kann aus zwei zur Nabe hin konvergierend angeordneten Stahldrähten oder -rohren sowie aus einem Stahlblechstreifen bestehen.

Eine solche Ausbildung der Lenkradspeiche ist insofern besonders vorteilhaft, als die Speiche gleichzeitig als feste Schreibunterlage dient.

Nachstehend ist ein Lenkrad gemäß der Erfindung anhand eines in der Zeichnung dargestellten Ausführungsbeispiels beschrieben. In der Zeichnung zeigt

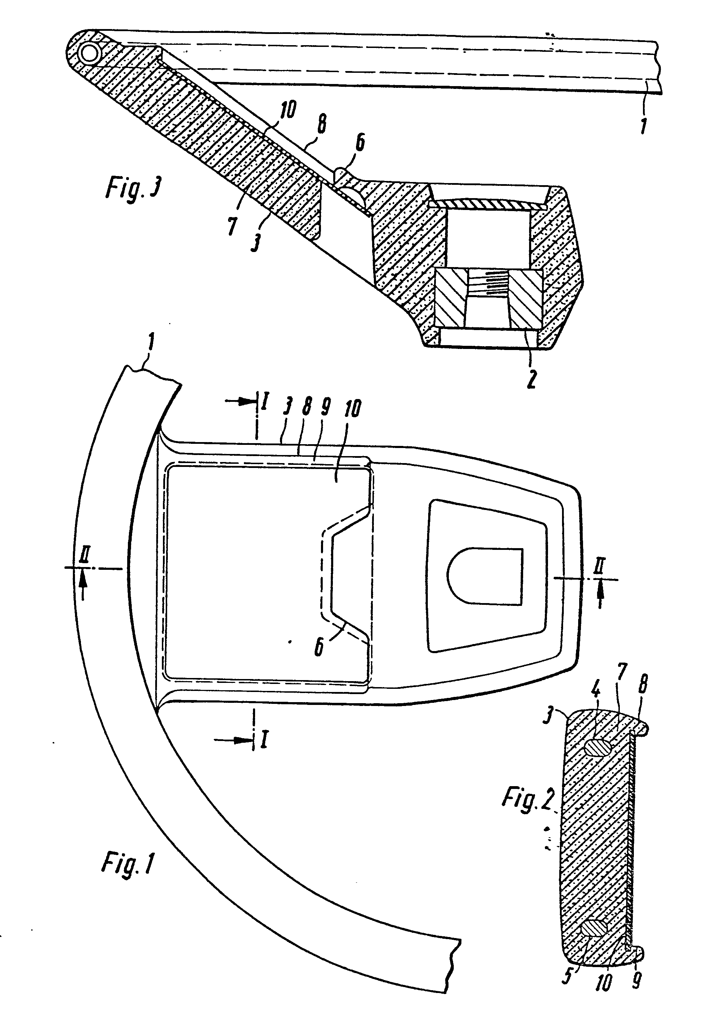

Fig. 1    eine ausschnittsweise Draufsicht eines Lenkrades im Bereich der Lenkradspeiche.

Fig. 2    einen Querschnitt durch die Lenkradspeiche entlang der Schnittlinie I - I der Fig. 1.

Fig. 3    einen Längsschnitt durch die Lenkradspeiche entlang der Schnittlinie II - II der Fig. 1.

Das in der Zeichnung dargestellte Lenkrad besteht aus dem Lenkradkranz 1 und der gegenüber diesem versenkt angeordneten Lenkradnabe 2, die beide über die konvergierend zur Nabe 2 verlaufenden, die Speiche 3 bildenden Stahldrähte 4, 5 verbunden sind. Alle Teile sind mit einer Polyurethan-Schaumschicht 7 ummantelt, wobei die Stahldrähte 4, 5 in einem Polyurethan-Schaumteil 7 eingebettet sind. Das Schaumteil besitzt fahrerseitig einen erhöhten umlaufenden Rand 8 mit einer innenseitig angebrachten schmalen Lippe 9, unter
der eine als Schreibplatte dienende Abdeckplatte 10
aus einem harten Kunststoff, z.B. ABS, festgeklemmt
ist. Am nabenseitigen Bereich des Randes 8 befindet
sich ein relativ breites Lippenstück 6, unter dem
Zettel oder dergleichen festgeklemmt werden können.

PATENTANSPRÜCHE
----------------

1. Lenkrad, bestehend aus einer gegossenen Nabe, einer darin eingegossenen Speiche aus Stahlrohr, Stahlblech oder Stahldraht und einem Kranz aus Stahlrohr, die mit einem elastisch oder plastisch verformbaren Kunststoff ummantelt sind, gekennzeichnet durch eine stark verbreitert ausgebildete Speiche (3), deren Kunststoffummantelung (6) zum Fahrer hin einen mit einer Innenlippe (9) versehenen, ganz oder teilweise umlaufenden, hochgezogenen Rand (8) aufweist, unter dem eine aus einem harten Werkstoff bestehende Schreibunterlage (10) festgeklemmt ist.

2. Lenkrad nach Anspruch 1, gekennzeichnet durch eine am nabenseitigen Rand der Kunststoffummantelung (6) angeordnete, in Längsrichtung der Speiche vergleichsweise breit gestaltete Klemmlippe (11).

Fig. 3

10

8

6

7

3

1

2

Fig. 1

1

I 3 8 9 10

II II

6

I

4 7 8

3

Fig. 2

5 10 9

Europäisches
Patentamt

**EUROPÄISCHER RECHERCHENBERICHT**

Nummer der Anmeldung

EP 80 20 0953

| | **EINSCHLÄGIGE DOKUMENTE** | | | **KLASSIFIKATION DER ANMELDUNG (Int Cl.³)** |
|---|---|---|---|---|
| Kategorie | Kennzeichnung des Dokuments mit Angabe, soweit erforderlich, der maßgeblichen Teile | betrifft Anspruch | | |
| A | US - A - 3 937 101 (WADE) | | | |
| A | FR - A - 1 134 660 (BELAVAL) | | | |
| A | FR - A - 1 153 555 (MERLATEAU) | | | B 62 D 1/04 |
| A | FR - A - 2 410 590 (COMIND) | | | |
| A | FR - A - 1 151 080 (QUILLERY) | | | |
| | ---- | | | |

**RECHERCHIERTE SACHGEBIETE (Int Cl.³)**

B 62 D

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 12-01-1981 | PIRIOU |

EPA form 1503.1 06.78